# EUROPÄISCHE PATENTSCHRIFT

(11) **EP 2 822 798 B1**
(45) Veröffentlichungstag und Bekanntmachung des Hinweises auf die Patenterteilung: **03.05.2017**
(21) Anmeldenummer: 13707548.7
(22) Anmeldetag: 23.02.2013
(51) Int. Cl.: B60K 35/00, B60L 11/18, B60W 10/08, B60W 10/26, B60W 10/06, B60W 50/08

(54) **VERFAHREN UND VORRICHTUNG ZUM ERMITTELN UND ANZEIGEN EINER RESTREICHWEITE EINES KRAFTWAGENS SOWIE KRAFTWAGEN MIT EINER VORRICHTUNG ZUM ERMITTELN UND ANZEIGEN EINER RESTREICHWEITE**
METHOD AND DEVICE FOR DETERMINING AND DISPLAYING A REMAINING RUNNING RANGE OF AN AUTOMOBILE VEHICLE AND AUTOMOBILE VEHICLE COMPRISING SUCH A DEVICE
PROCÉDÉ ET DISPOSITIF POUR DÉTERMINER ET AFFICHER UNE AUTONOMIE D'UN VÉHICULE AUTOMOBILE ET VÉHICULE AUTOMOBILE AVEC UN TEL DISPOSITIF

(30) Priorität: 10.03.2012 DE 102012004930
(43) Veröffentlichungstag der Anmeldung: 14.01.2015
(73) Patentinhaber: Audi AG, 85045 Ingolstadt (DE)
(72) Erfinder: KLIMESCH, Michael, 85057 Ingolstadt (DE); PAPAJEWSKI, Jens, 86697 Unterhausen (DE)
(74) Vertreter: Herbst, Matthias Heinz
(86) Internationale Anmeldenummer: PCT/EP2013/000535
(87) Internationale Veröffentlichungsnummer: WO 2013/135343

(56) Entgegenhaltungen:
- WO-A1-2012/163437
- DE-A1-102008 047 923
- DE-A1-102011 104 443
- "Opel Ampera 08/2011 Betriebsanleitung", , 31. August 2011 (2011-08-31), Seiten 1-206, XP055068237, Rüsselsheim Gefunden im Internet: URL:http://de.opel.ch/content/dam/Opel/Eur ope/switzerland/nscwebsite/de/11_Brochure_ Library/05_Manuals/om_Ampera_KTA-2724_1-de _eu_my12_5_de_DE_online.pdf [gefunden am 2013-06-25]

## Beschreibung

Die Erfindung betrifft ein Verfahren zum Ermitteln und Anzeigen einer Restreichweite eines elektrisch antreibbaren Kraftwagens der im Oberbegriff des Patentanspruchs 1 angegebenen Art. Des Weiteren betrifft die Erfindung eine Vorrichtung zum Ermitteln und Anzeigen einer Restreichweite eines elektrisch antreibbaren Kraftwagens der im Oberbegriff des Patentanspruchs 14 angegebenen Art. Ferner betrifft die Erfindung einen Kraftwagen mit einer Vorrichtung zum Ermitteln und Anzeigen einer Restreichweite.
Die DE 10 2008 047 923 A1 offenbart eine Vorrichtung und ein Verfahren zum Ermitteln und Anzeigen einer Restreichweite eines elektrisch antreibbaren Kraftwagens. Gemäß des dort offenbarten Verfahrens wird fortlaufend eine momentane Restreichweite des Kraftwagens, welche bei einem rein elektrischen Antrieb des Kraftwagens erzielbar ist, ermittelt, und die ermittelte Restreichweite auf eine Anzeigeeinheit angezeigt.
Die DE 10 2011 102 766 A1 zeigt ein Verfahren zum Betreiben einer Einrichtung zum Aufladen einer Batterie in einem Hybridfahrzeug. Nach Betätigung eines entsprechenden Bedienelements wird das Fahrzeug in einem solchen Modus betrieben, bei welchem die bei Betätigung des Bedienelements angezeigte, bei einem rein elektrischen Antrieb mit dem Fahrzeug zurücklegbare Restreichweite im Wesentlichen konstant gehalten wird.

Das gattungsbildende Dokument "Opel Ampera 08/2011, Betriebsanleitung" (abrufbar unter http://de.opel.ch/content/dam/Opel/Europe/switzerland/nscwebsite/de/11_Bro chure_Library/05_Manuals/om_Ampera_KTA-2724_1-de_eu_my12_5_de_DE_online.pdf) zeigt einen mittels eines Elektromotors antreibbaren Kraftwagen mit einem Range-Extender. Sobald ein Fahrer des Kraftwagens während eines Elektromodus, in welchem ausschließlich der Elektromotor betrieben wird, einen sogenannten Haltemodus aktiviert, wird der Range-Extender zugeschaltet. Dabei wird ein mit Reichweitenverlängerung bezeichneter Modus aktiviert. In diesem Haltemodus wird die zum Zeitpunkt der Aktivierung des Haltemodus verbleibende Batterieladung als Reserve gespeichert, wobei mittels des Range-Extenders die zum Antreiben des Kraftwagens erforderliche elektrische Energie bereitgestellt wird. Des Weiteren umfasst der Kraftwagen eine Anzeigeeinrichtung, mittels welcher die rein elektrisch erzielbare Reichweite ausschließlich im Elektromodus angezeigt wird. Im Modus Reichweitenverlängerung wird ausschließlich der Kraftstoffstand des Verbrennungsmotors des Range-Extenders sowie die mittels des Range-Extenders erzielbare Reichweite angezeigt.

Es ist die Aufgabe der vorliegenden Erfindung, eine Lösung bereitzustellen, mittels welcher eine verbesserte Anzeige einer Restreichweite eines Kraftwagens bereitgestellt wird.

Diese Aufgabe wird durch ein Verfahren und eine Vorrichtung zum Ermitteln und Anzeigen einer Restreichweite eines elektrisch antreibbaren Kraftwagens mit den Merkmalen der unabhängigen Patentansprüche sowie mit einem Kraftwagen mit einer Vorrichtung zum Ermitteln und Anzeigen einer Restreichweite gelöst.

Bei einem erfindungsgemäßen Verfahren zum Ermitteln und Anzeigen einer Restreichweite eines elektrisch antreibbaren Kraftwagens wird fortlaufend mittels einer Steuereinheit eine momentane Restreichweite des Kraftwagens, welche bei einem rein elektrischen Antrieb des Kraftwagens erzielbar ist, ermittelt und eine Anzeige der ermittelten Restreichweite auf eine Anzeigeeinheit gesteuert, wobei sich das erfindungsgemäße Verfahren durch die folgenden Schritte auszeichnet:
- Erkennen eines Aktivierens eines Reichweitenerhaltungsmodus mittels der Steuereinheit; und
- Ansteuern der Anzeigeeinheit mittels der Steuereinheit, wonach eine vor dem Aktivieren des Reichweitenerhaltungsmodus ermittelte Restreichweite während des aktivierten Reichweitenerhaltungsmodus mittels der Anzeigeeinheit angezeigt wird.

Während des Reichweitenerhaltungsmodus wird der Kraftwagen derart betrieben, dass die noch verbleibende Restreichweite des Kraftwagens, welche bei einem rein elektrischen Antrieb des Kraftwagens erzielbar ist, zumindest im Wesentlichen aufrecht erhalten wird. Je nachdem, wie während des Reichweitenerhaltungsmodus der Kraftwagen betrieben wird, insbesondere welche Leistung von dem elektrischen Antrieb des Kraftwagens bereitzustellen ist, kann dabei die Restreichweite des Kraftwagens innerhalb gewisser Grenzen sowohl zunehmen als auch abnehmen. Dadurch, dass die Anzeigeeinheit während des Reichweitenerhaltungsmodus die vor dem Aktivieren des Reichweitenerhaltungsmodus ermittelte Restreichweite, insbesondere die unmittelbar vor dem Aktivieren des Reichweitenerhaltungsmodus ermittelte Restreichweite, anzeigt, werden die gegebenenfalls während des Reichweitenerhaltungsmodus auftretenden Schwankungen der Restreichweite des Kraftwagens nicht angezeigt. Mit anderen Worten ist es stattdessen erfindungsgemäß vorgesehen, die Anzeigeeinheit derart mittels der Steuereinheit anzusteuern, dass durchgängig ein konstanter Wert für die Restreichweite des Kraftwagens angezeigt wird. Auftretende Restreichweitenschwankungen, beispielsweise aufgrund von Regelabweichungen der Betriebsstrategie des Kraftwagens, werden somit nicht in der Reichweitenanzeige sichtbar. Einem Nutzer des Kraftwagens werden somit die gegebenenfalls während des Reichweitenerhaltungsmodus auftretenden Restreichweitenschwankungen nicht angezeigt, so dass beispielsweise einer Irritierung des Nutzers aufgrund einer permanent schwankenden Restreichweitenanzeige verhindert werden kann.

Somit wird ein verbessertes Verfahren zum Ermitteln und Anzeigen einer Restreichweite eines elektrisch antreibbaren Kraftwagens bereitgestellt, mittels welcher eine verbesserte Anzeige einer Restreichweite eines Kraftwagens bereitgestellt wird, wobei eine Ausgabe bzw. Anzeige eines permanent konstanten Wertes für die Restreichweite während des Reichweitenerhaltungsmodus angezeigt wird, so dass eine besonders nutzerfreundliche Anzeige der Restreichweite bereitgestellt wird.

Erfindungsgemäß werden während des aktivierten Reichweitenerhaltungsmodus ein unterer Reichweitenwert und ein oberer Reichweitenwert vorgegeben, wobei auf der Anzeigeeinheit so lange die vor dem Aktivieren des Reichweitenerhaltungsmodus ermittelte Restreichweite angezeigt wird, wie die momentan ermittelte Restreichweite zwischen dem unteren Reichweitenwert und dem oberen Reichweitenwert liegt. Durch Vorsehen eines oberen und unteren Schwellwertes wird zusätzlich sichergestellt, dass sowohl zu große Abweichungen nach oben als auch nach unten zwischen dem eingefrorenen Reichweitenwert und dem tatsächlichen Reichweitenwert erkannt und einem Nutzer des Kraftwagens rechtzeitig mitgeteilt werden können.

Bei einer vorteilhaften Ausführungsform der Erfindung wird während des Reichweitenerhaltungsmodus eine Traktionsbatterie des Kraftwagens mittels eines Reichweitenverlängerers, beispielsweise mittels eines so genannten Range-Extenders, aufgeladen und/oder eine elektrische Antriebsmaschine, insbesondere ein Elektromotor, des Kraftwagens ausgeschaltet. Bei dem Kraftwagen kann es sich beispielsweise um ein Hybridelektrofahrzeug handeln. Der Kraftwagen kann dabei als so genannter serieller Hybrid, paralleler Hybrid oder auch als so genannter leistungsverzweigter Hybrid ausgebildet sein. Durch das Aufladen der Traktionsbatterie und/oder durch das gleichzeitige Abschalten der elektrischen Antriebsmaschine während des Reichweitenerhaltungsmodus ist es möglich, während des Reichweitenerhaltungsmodus die elektrische Restreichweite des Kraftwagens zumindest im Wesentlichen konstant zu halten.

In weiterer vorteilhafter Ausgestaltung der Erfindung ist es vorgesehen, dass während des Reichweitenerhaltungsmodus in Abhängigkeit von der momentan ermittelten Restreichweite eine Lastpunktanhebung oder Lastpunktabsenkung eines Verbrennungsmotors des Kraftwagens vorgenommen wird. Falls während des Reichweitenerhaltungsmodus die elektrische Restreichweite des Kraftwagens unter einen vorgegebenen Schwellwert fallen sollte, kann der Verbrennungsmotor mittels einer Lastpunktanhebung in einem höheren Lastpunkt betrieben werden, wobei, insbesondere bei einem als Plugin-Hybrid ausgebildeten Kraftwagen, mittels der zusätzlich von dem Verbrennungsmotor bereitgestellten Energie ein Generator betrieben wird, mittels welchem eine Traktionsbatterie des Kraftwagens aufgeladen wird, wodurch die Restreichweite des Kraftwagens wieder vergrößert werden kann. Falls während des Reichweitenerhaltungsmodus die elektrische Restreichweite des Kraftwagens einen vorgegebenen Schwellwert überschreiten sollte, kann der Verbrennungsmotor mittels einer Lastpunktabsenkung in einem niedrigeren Lastpunkt betrieben werden, wobei gleichzeitig der Elektromotor beispielsweise zugeschaltet und/oder in einem höheren Lastpunkt betrieben wird, so dass die elektrische Restreichweite wieder verringert werden kann, bis diese wieder unter den vorgegebenen Schwellwert fällt.

Es wäre auch möglich, dass die vor dem Aktivieren des Reichweitenerhaltungsmodus ermittelte Restreichweite so lange mittels der Anzeigeeinheit angezeigt wird, wie die momentan ermittelte Restreichweite eine vorgegebene Abweichung gegenüber wenigstens einem vorgegebenen Reichweitenwert unterschreitet. Mit anderen Worten ist es möglich, während des Reichweitenerhaltungsmodus fortlaufend die momentan ermittelte Restreichweite mit einem Schwellwert zu vergleichen, wobei die vor dem Aktivieren des Reichweitenerhaltungsmodus ermittelte Restreichweite so lange mittels der Anzeigeeinheit angezeigt wird, wie die momentan ermittelte Restreichweite den vorgegebenen Schwellwert nicht über- bzw. unterschreitet. Dadurch wird sichergestellt, dass einem Nutzer des Kraftwagens nur so lange die vor dem Aktivieren des Reichweitenerhaltungsmodus ermittelte Restreichweite angezeigt wird, so lange die vor dem Aktivieren des Reichweitenerhaltungsmodus ermittelte Restreichweite keine zu große Abweichung von der tatsächlichen Restreichweite aufweist.

Es wäre auch möglich, dass während des aktivierten Reichweitenerhaltungsmodus die momentan ermittelte Restreichweite auf der Anzeigeeinheit ausgegeben wird, falls die momentan ermittelte Restreichweite die vorgegebene Abweichung gegenüber dem wenigstens einen vorgegebenen Reichweitenwert überschreitet. Mit anderen Worten kann einem Nutzer des Kraftwagens auch während des Reichweitenerhaltungsmodus die tatsächliche Restreichweite des Kraftwagens angezeigt werden, sobald sich zwischen der vor dem Aktivieren des Reichweitenerhaltungsmodus ermittelten Reichweite und der tatsächlichen Restreichweite eine zu große Abweichung ergeben sollte. Dadurch wird sichergestellt, dass einem Nutzer rechtzeitig mitgeteilt wird, falls es trotz eines aktiven Reichweitenerhaltungsmodus nicht möglich sein sollte, die elektrische Restreichweite des Kraftwagens zumindest im Wesentlichen konstant zu halten. Einem unerwünschten Liegenbleiben des elektrisch angetriebenen Kraftwagens kann dadurch effektiv vorgebeugt werden.

Gemäß einer weiteren vorteilhaften Ausführungsform der Erfindung ist es vorgesehen, dass der Reichweitenerhaltungsmodus mittels einer weiteren Steuereinheit aktiviert wird, wobei die Steuereinheit so lange ein Signal von der weiteren Steuereinheit empfängt, wie der Reichweitenerhaltungsmodus aktiviert ist. Dadurch wird auf besonders einfache Weise sichergestellt, dass die Steuereinheit, mittels welcher die Anzeigeeinheit gesteuert wird, permanent eine Information darüber erhält, ob der Reichweitenerhaltungsmodus aktiv oder inaktiv ist.

In weiterer vorteilhafter Ausgestaltung der Erfindung ist es vorgesehen, dass die Steuereinheit fortlaufend die momentan ermittelte Reichweite an die weitere Steuereinheit übermittelt, wobei die weitere Steuereinheit eine Betriebsstrategie für den Kraftwagen in Abhängigkeit von den empfangenen Restreichweitenwerten regelt. Dadurch kann die weitere Steuereinheit die Betriebsstrategie des Kraftwagens besonders genau einstellen, um die Restreichweite während des Reichweitenerhaltungsmodus möglichst gut aufrecht zu erhalten.

In weiterer vorteilhafter Ausgestaltung der Erfindung ist es vorgesehen, dass die an die weitere Steuereinheit übermittelten Restreichweitenwerte in einer zur Ermittlung der Betriebsstrategie geeigneten Auflösung bereitgestellt werden. Die Auflösung ist dabei deutlich kleiner als die Auflösung, mittels welcher die Anzeige der Restreichweite auf der Anzeigeeinheit betrieben wird. Die Restreichweite wird also zumindest fortlaufend mit der Auflösung ermittelt, mit der die Restreichweite mittels der Steuereinheit an die weitere Steuereinheit übermittelt wird. Mit anderen Worten wird die Feinheit der Auflösung dadurch bestimmt, welche Auflösung für die Ermittlung der Betriebsstrategie notwendig ist. Durch die Anpassung der Auflösung der übermittelten Restreichweitenwerte wird ebenfalls eine besonders genaue Abstimmung der Betriebsstrategie auf die zu erhaltende Restreichweite ermöglicht.

Eine weitere vorteilhafte Ausführungsform der Erfindung sieht vor, dass im Anschluss an eine Deaktivierung des Reichweitenerhaltungsmodus die momentan ermittelte Restreichweite mit einer vorgegebenen Zeitverzögerung mittels der Anzeigeeinheit angezeigt wird, falls zum Zeitpunkt der Deaktivierung des Reichweitenerhaltungsmodus noch die vor dem Aktivieren des Reichweitenerhaltungsmodus ermittelte Restreichweite mittels der Anzeigeeinheit angezeigt wird. Beispielsweise ist es möglich, dass sich nach einer Deaktivierung des Reichweitenerhaltungsmodus die Werte der dann momentan vorliegenden Restreichweite und der vor der Aktivierung des Reichweitenerhaltungsmodus gegebenen Restreichweite unterscheiden. Dadurch, dass eine Anpassung der angezeigten Restreichweite erst nach einer vorgegebenen Zeitverzögerung erfolgt, wird eine sprunghafte Änderung der angezeigten Restreichweite vermieden. Irritationen eines Nutzers eines Kraftwagens können dadurch vorgebeugt werden.

In weiterer vorteilhafter Ausgestaltung der Erfindung ist es vorgesehen, dass die momentan ermittelte Restreichweite mit einer kleineren Auflösung ermittelt wird, als diese mittels der Anzeigeeinheit angezeigt wird. Dadurch ist es beispielsweise möglich, dass der weiteren Steuereinheit eine entsprechend fein aufgelöste Restreichweite zur akkuraten Bestimmung der Betriebsstrategie übermittelt werden kann, wobei gleichzeitig aufgrund der groberen Auflösung der angezeigten Restreichweite eine Irritierung des Nutzers vermieden werden kann.

Gemäß einer weiteren vorteilhaften Ausführungsform der Erfindung ist es vorgesehen, dass die Auflösung der mittels der Anzeigeeinheit angezeigten Restreichweite in Abhängigkeit von einem Energieinhalt wenigstens eines Energiespeichers des Kraftwagens angepasst wird. Beispielsweise kann die Auflösung in Abhängigkeit von dem noch vorhandenen Energieinhalt einer Traktionsbatterie des Kraftwagens angepasst werden. Darüber hinaus ist es ebenfalls möglich, dass die Auflösung in Abhängigkeit von einem noch vorhandenen Inhalt eines Treibstofftanks des Kraftwagens, mittels welchem ein Verbrennungsmotor des Kraftwagens versorgt wird, angepasst wird. Insbesondere ist es vorgesehen, dass die Aktualisierung der Anzeige der verbleibenden Restreichweite auf der Anzeigeeinheit in immer feineren Schritten erfolgt, je leerer ein Kraftstofftank und/oder je geringer der Energieinhalt eine Traktionsbatterie ist. Dadurch wird gewährleistet, dass einem Nutzer des Kraftwagens rechtzeitig mitgeteilt wird, wenn die Restreichweite des Kraftwagens zu Neige geht, wodurch einem Liegenbleiben des Kraftwagens aufgrund einer leeren Traktionsbatterie und/oder eines leeren Treibstofftanks vorgebeugt wird.

Bei einer weiteren vorteilhaften Ausführungsform der Erfindung wird die momentane Restreichweite nach Ablauf von vorgegebenen Wegintervallen und/oder Zeitintervallen fortlaufend mittels der Steuereinheit ermittelt. Mit anderen Worten ist es möglich, die Ermittlung der momentanen Restreichweite nach Zurücklegung bestimmter Entfernungen und/oder Verstreichen bestimmter Zeiten fortlaufend zu ermitteln und zu aktualisieren. Die Weg- und Zeitintervalle können dabei ebenfalls in Abhängigkeit von einer Geschwindigkeit des Kraftwagens angepasst werden.

Eine erfindungsgemäße Vorrichtung zum Ermitteln und Anzeigen einer Restreichweite eines elektrisch antreibbaren Kraftwagens umfasst eine Steuereinheit und eine Anzeigeeinheit, wobei die Steuereinheit dazu ausgelegt ist, fortlaufend eine momentane Restreichweite des Kraftwagens, welche bei einem rein elektrischen Antrieb des Kraftwagens erzielbar ist, zu ermitteln und eine Anzeige der Restreichweite auf der Anzeigeeinheit zu steuern, wobei sich die erfindungsgemäße Vorrichtung dadurch auszeichnet, dass
- die Steuereinheit dazu ausgelegt ist, eine Aktivierung eines Reichweitenerhaltungsmodus zu erkennen; und
- die Steuereinheit dazu ausgelegt ist, bei aktiviertem Reichweitenerhaltungsmodus eine Anzeige einer vor dem Aktivieren des Reichweitenerhaltungsmodus ermittelten Restreichweite auf der Anzeigeeinheit zu bewirken. Zudem ist die Steuereinheit dazu ausgelegt, während des aktivierten Reichweitenerhaltungsmodus einen unteren Reichweitenwert und einen oberen Reichweitenwert vorzugeben und die Anzeigeeinheit derart anzusteuern, dass auf der Anzeigeeinheit so lange die vor dem Aktivieren des Reichweitenerhaltungsmodus ermittelte Restreichweite angezeigt wird, wie die momentan ermittelte Restreichweite zwischen dem unteren Reichweitenwert und dem oberen Reichweitenwert liegt.

Vorteilhafte Ausführungen des erfindungsgemäßen Verfahrens sind als vorteilhafte Ausführungen der Vorrichtung anzusehen, wobei hier insbesondere die Vorrichtung Mittel umfasst, mit denen die Verfahrensschritte durchführbar sind.

Ein erfindungsgemäßer Kraftwagen umfasst eine erfindungsgemäße Vorrichtung zum Ermitteln und Anzeigen einer Restreichweite oder eine vorteilhafte Ausführungsform der erfindungsgemäßen Vorrichtung.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in:
- Fig. 1: eine schematische Darstellung eines Kraftwagens mit einer Vorrichtung zum Ermitteln und Anzeigen einer Restreichweite, welche eine Steuereinheit und eine Anzeigeeinheit umfasst, wobei die Steuereinheit mit einer weiteren Steuereinheit des Kraftwagens gekoppelt ist;
- Fig. 2: ein schematisches Diagramm, in welchem ein Signal über einer Zeitachse aufgetragen ist, welches von der weiteren Steuereinheit an die Steuereinheit übertragen wird, sobald ein Reichweitenerhaltungsmodus aktiviert wird;
- Fig. 3: ein schematisches Diagramm, in welchem eine tatsächliche mittels der Steuereinheit ermittelte Restreichweite des Kraftwagens, welche bei einem rein elektrischen Antrieb des Kraftwagens erzielbar ist, über der Zeit aufgetragen ist; und in
- Fig. 4: ein schematisches Diagramm, in welchem die auf der Anzeigeeinheit angezeigte Restreichweite des Kraftwagens über der Zeit aufgetragen ist.

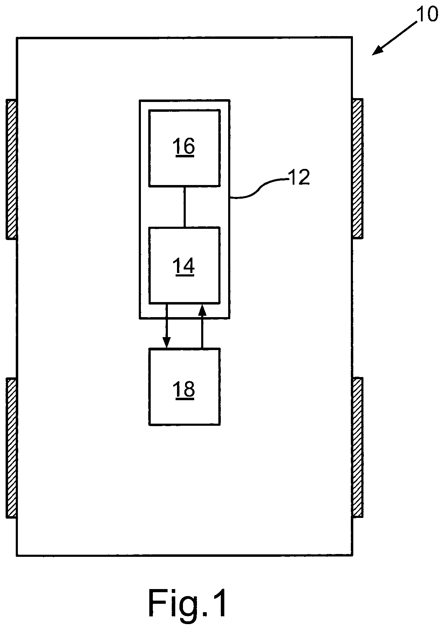

Ein Kraftwagen 10 mit einer Vorrichtung 12 zum Ermitteln und Anzeigen einer Restreichweite des Kraftwagens 10 ist in einer schematischen Darstellung in Fig. 1 gezeigt. Die Vorrichtung 12 umfasst eine Steuereinheit 14, welche dazu ausgelegt ist, fortlaufend eine momentane Restreichweite des Kraftwagens, welche bei einem rein elektrischen Antrieb des Kraftwagens 10 erzielbar ist, zu ermitteln und eine Anzeige der Restreichweite auf einer Anzeigeeinheit 16 der Vorrichtung 12 zu steuern. Des Weiteren ist die Steuereinheit 14 mit einer weiteren Steuereinheit 18 des Kraftwagens 10 gekoppelt. Die weitere Steuereinheit 18 dient unter anderem dazu, eine Betriebsstrategie des Kraftwagens 10 festzulegen bzw. zu steuern. Bei dem Kraftwagen 10 kann es sich beispielsweise um ein Hybridelektrofahrzeug handeln, welches von mindestens einem hier nicht dargestellten Elektromotor und einem weiteren Energiewandler angetrieben wird und eine entsprechende Energie aus einem Betriebskraftstofftank und einer Speichereinrichtung für elektrische Energie bezieht. Der Kraftwagen 10 kann dabei als so genannter serieller Hybrid, paralleler Hybrid oder auch als so genannter leistungsverzweigter Hybrid ausgebildet sein. Die von der weiteren Steuereinheit 18 festgelegte bzw. gesteuerte Betriebsstrategie definiert dabei das Zusammenspiel der in dem Kraftwagen 10 enthaltenen Antriebskomponenten. Mit anderen Worten beinhaltet die Betriebsstrategie eine Definition, zu welchem Zeitpunkt und in welchem Maße einzelne Komponenten, beispielsweise ein Elektromotor oder ein Verbrennungsmotor, betrieben werden.

Des Weiteren ist die weitere Steuereinheit 18 dazu ausgelegt, den Kraftwagen 10 in einem so genannten Reichweitenerhaltungsmodus 20 zu betreiben, in welchem entsprechende Maßnahmen ergriffen werden, um die elektrische Restreichweite des Kraftwagens 10 im Wesentlichen konstant zu halten. Beispielsweise ist es möglich, dass während des Reichweitenerhaltungsmodus 20 eine hier nicht dargestellte Traktionsbatterie des Kraftwagens 10 mittels eines ebenfalls hier nicht dargestellten Reichweitenverlängerers, eines so genannten Range-Externders, aufgeladen und/oder eine elektrische Antriebsmaschine, insbesondere ein Elektromotor, des Kraftwagens 10 ausgeschaltet wird.

Zudem kann während des Reichweitenerhaltungsmodus 20 in Abhängigkeit von der momentan ermittelten Restreichweite 24 eine Lastpunktanhebung oder Lastpunktabsenkung eines Verbrennungsmotors des Kraftwagens 10 vorgenommen werden. Falls während des Reichweitenerhaltungsmodus 20 die elektrische Restreichweite des Kraftwagens unter einen vorgegebenen Schwellwert fallen sollte, kann der Verbrennungsmotor mittels einer Lastpunktanhebung in einem höheren Lastpunkt betrieben werden, wobei, insbesondere bei einem als Plugin-Hybrid ausgebildeten Kraftwagen10, mittels der zusätzlich von dem Verbrennungsmotor bereitgestellten Energie ein Generator betrieben wird, mittels welchem eine Traktionsbatterie des Kraftwagens aufgeladen wird, wodurch die Restreichweite 24 des Kraftwagens 10 wieder vergrößert werden kann. Falls während des Reichweitenerhaltungsmodus 20 die elektrische Restreichweite 24 des Kraftwagens 10 einen vorgegebenen Schwellwert überschreiten sollte, kann der Verbrennungsmotor mittels einer Lastpunktabsenkung in einem niedrigeren Lastpunkt betrieben werden, wobei gleichzeitig der Elektromotor beispielsweise zugeschaltet und/oder in einem höheren Lastpunkt betrieben wird, so dass die elektrische Restreichweite 24 wieder verringert werden kann, bis diese wieder unter den vorgegebenen Schwellwert fällt.

Darüber hinaus sind auch noch weitere Maßnahmen denkbar, mittels welchen die elektrische Restreichweite 24 des Kraftwagens 10 aufrecht bzw. im Wesentlichen konstant gehalten werden kann. Dabei ist es nicht zwingend erforderlich, dass der Ladezustand der Traktionsbatterie konstant gehalten wird, vielmehr ist es erforderlich, dass je nach geplanter Streckenführung, entlang welcher der Kraftwagen 10 bewegt werden soll, die elektrische Restreichweite 24 des Kraftwagens 10 aufrecht erhalten wird.

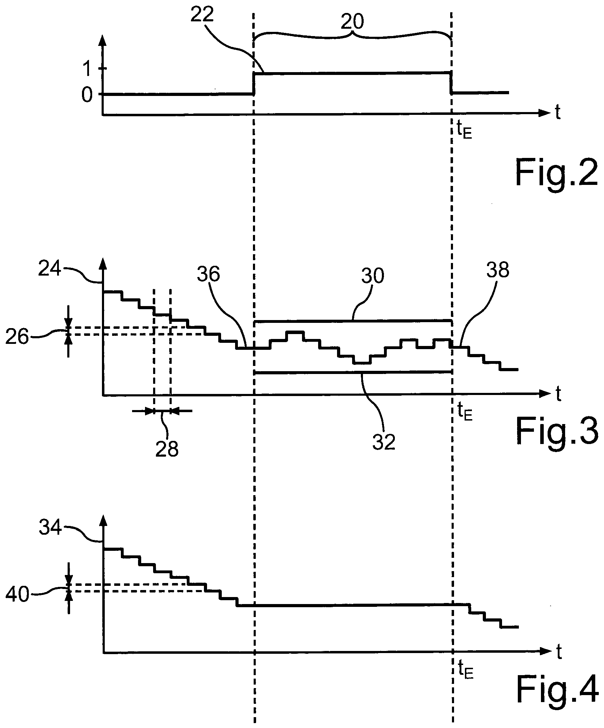

In Fig. 2 ist in einem schematischen Diagramm ein Signal 22 über der Zeit t aufgetragen, welches von der weiteren Steuereinheit 18 so lange an die Steuereinheit 14 übertragen wird, wie der Reichweitenerhaltungsmodus 20 aktiviert ist. Mit anderen Worten ist es vorgesehen, dass der Reichweitenerhaltungsmodus 20 mittels der weiteren Steuereinheit 18 aktiviert wird, wobei die Steuereinheit 14 so lange das Signal 22 von der weiteren Steuereinheit 18 empfängt, wie der Reichweitenerhaltungsmodus aktiviert ist. Beispielsweise kann die weitere Steuereinheit 18 das Signal 22 mit einem Wert =1 an die Steuereinheit 14 übertragen, so lange der Reichweitenerhaltungsmodus 20 aktiviert ist und sonst einen Wert =0 an die Steuereinheit 14 übertragen, wenn der Reichweitenerhaltungsmodus 20 nicht aktiviert ist.

In Fig. 3 ist in einem schematischen Diagramm die mittels der Steuereinheit 14 fortlaufend ermittelte momentane Restreichweite 24 über der Zeit t aufgetragen. Die Restreichweite 24 wird mittels der Steuereinheit 14 unter Berücksichtigung von beispielsweise dem Verbrauch des Elektromotors und weiteren Nebenverbrauchern des Kraftwagens 10 fortlaufend ermittelt. Die Steuereinheit 14 übermittelt dabei fortlaufend die ermittelten Restreichweitenwerte 24 an die weitere Steuereinheit 18, wobei die weitere Steuereinheit 18 eine Betriebsstrategie für den Kraftwagen 10 in Abhängigkeit von den empfangenen Restreichweitenwerten 24 regelt. Dabei werden die an die weitere Steuereinheit 18 übermittelten Restreichweitenwerte 24 an eine zur Ermittlung der Betriebsstrategie geeignete Auflösung übermittelt und gegebenenfalls noch vorher entsprechend umgewandelt. Die momentane Restreichweite 24 kann dabei nach Ablauf von vorgegebenen Zeitintervallen 28 fortlaufend mittels der Steuereinheit 14 ermittelt werden. Darüber hinaus ist es ebenfalls möglich, die momentane Restreichweite 24 nach Ablauf von vorgegebenen Wegintervallen, beispielsweise nach dem Zurücklegen definierter Strecken mit dem Kraftwagen 10, fortlaufend neu zu berechnen.

Wie aus dem Diagramm in Fig. 3 ersichtlich, nimmt die Restreichweite 24 während des Reichweitenerhaltungsmodus 20 leicht zu und wieder ab. Im Wesentlichen wird die Restreichweite 24 allerdings während des Reichweitenerhaltungsmodus auf einem nahezu konstanten Wert gehalten.

Darüber hinaus sind in dem Diagramm zwei vorgegebene Reichweitenwerte 30, 32 in dem Diagramm eingezeichnet. Im vorliegenden Fall bewegt sich die Restreichweite 24 während des Reichweitenerhaltungsmodus 20 zwischen den beiden vorgegebenen Reichweitenwerten 30, 32. Je nach Betriebsstrategie des Kraftwagens 10 kann es aber ebenso gut sein, dass die Restreichweite 24 während des Reichweitenerhaltungsmodus 20 die vorgegebenen Reichweitenwerte 30, 32 über- bzw. unterschreitet.

In Fig. 4 ist in einem schematischen Diagramm die auf der Anzeigeeinheit 16 angezeigte Restreichweite 34 über der Zeit t aufgetragen. Wie aus der vorliegenden Darstellung zu erkennen ist, weist die angezeigte Restreichweite 34 während des Reichweitenerhaltungsmodus 20 einen konstanten Wert auf. Zeitlich vor und nach dem Reichweitenerhaltungsmodus 20 stimmen die Werte der Restreichweite 24 in Fig. 3 und die Werte der angezeigten Restreichweiten 34 überein. Es ist dabei vorgesehen, dass die Restreichweite 34 als numerischer Wert auf der Anzeigeeinheit 16 ausgegeben und fortlaufend aktualisiert wird.

Zudem wird die Auflösung der mittels der Anzeigeeinheit 16 angezeigten Restreichweite 34 in Abhängigkeit von einem Energieinhalt wenigstens eines Energiespeichers des Kraftwagens angepasst. Beispielsweise kann die Auflösung 40 in Abhängigkeit von dem noch vorhandenen Energieinhalt einer Traktionsbatterie des Kraftwagens 10 angepasst werden. Darüber hinaus ist es ebenfalls möglich, dass die Auflösung 40 in Abhängigkeit von einem noch vorhandenen Inhalt eines Treibstofftanks des Kraftwagens 10, mittels welchem ein Verbrennungsmotor des Kraftwagens 10 versorgt wird, angepasst wird. Insbesondere ist es vorgesehen, dass die Aktualisierung der angezeigten verbleibenden Restreichweite 34 auf der Anzeigeeinheit 16 in immer feineren Schritten erfolgt, je leerer ein Kraftstofftank und/oder je geringer der Energieinhalt eine Traktionsbatterie ist. Mit anderen Worten wird die angezeigte Restreichweite 34 mit geringer werdendem Energieinhalt der Traktionsbatterie und/oder geringeren Inhalt des Treibstofftanks in immer kleineren Schritten über der Zeit t oder über einer zurückgelegten Strecke des Kraftwagens 10 aktualisiert. Ebenso ist es aber auch möglich, dass die angezeigte Restreichweite 34 in Form eines Histogramms auf der Anzeigeeinheit 16 angezeigt wird, welche beispielsweise der Darstellung in Fig. 4 entsprechen kann.

Nachfolgend wird in Zusammenschau der Figuren 1 bis 4 ein Verfahren zum Ermitteln und Anzeigen einer Restreichweite 24 des elektrisch antreibbaren Kraftwagens 10 erläutert. Sobald der Reichweitenerhaltungsmodus 20 aktiviert worden ist, wird dies mittels der Steuereinheit 14 erkannt, da die Steuereinheit 14 ein entsprechendes Signal 22 von der weiteren Steuereinheit 18 empfängt, so lange der Reichweitenerhaltungsmodus 20 aktiviert ist. Die Steuereinheit 14 steuert dann die Anzeigeeinheit 16 derart an, dass die vor dem Aktivieren des Reichweitenerhaltungsmodus 20 ermittelte Restreichweite 36 während des aktivierten Reichweitenerhaltungsmodus 20 mittels der Anzeigeeinheit 16 angezeigt wird. Die vor dem Aktivieren des Reichweitenerhaltungsmodus 20 ermittelte Restreichweite 36 wird so lange mittels der Anzeigeeinheit 16 angezeigt, wie die momentan ermittelte Restreichweite 24 eine vorgegebene Abweichung gegenüber den vorgegebenen Reichweitenwerten 30, 32 unterschreitet. Im vorliegenden Fall wird während des aktivierten Reichweitenerhaltungsmodus 20 ein unterer Reichweitenwert 32 und ein oberer Reichweitenwert 30 vorgegeben, wobei auf der Anzeigeeinheit 16 so lange die vor dem Aktivieren des Reichweitenerhaltungsmodus 20 ermittelte Restreichweite 36 angezeigt wird, wie die momentan ermittelte Restreichweite 24 zwischen dem unteren Reichweitenwert 32 und dem oberen Reichweitenwert 30 liegt. Falls die momentan ermittelte Reichweite 24 die vorgegebenen Reichweitenwerte 30, 32 über- bzw. unterschreitet, wird während des aktivierten Reichweitenerhaltungsmodus 20 die momentan ermittelte Restreichweite 24, also die tatsächliche Restreichweite des Kraftwagens 10, auf der Anzeigeeinheit 16 ausgegeben.

Im Anschluss an eine Deaktivierung des Reichweitenerhaltungsmodus 20 wird die zum Zeit der Deaktivierung des Reichweitenerhaltungsmodus 20 ermittelte Restreichweite 38 mit einer vorgegebenen Zeitverzögerung mittels der Anzeigeeinheit 16 angezeigt, falls zum Zeitpunkt t_{E} der Deaktivierung des Reichweitenerhaltungsmodus 20 noch die vor dem Aktivieren des Reichweitenerhaltungsmodus 20 ermittelte Restreichweite 36 mittels der Anzeigeeinheit 16 angezeigt wird. Mit anderen Worten erfolgt eine Aktualisierung der angezeigten Restreichweite 34 auf der Anzeigeeinheit 16 nach Beendigung des Reichweitenerhaltungsmodus 20 nicht abrupt, vielmehr wird die angezeigte Restreichweite 34 über einen vorgegebenen Zeitraum, beispielsweise innerhalb von einer halben Minute an die tatsächliche Restreichweite 24 angepasst.

## Patentansprüche

1. Verfahren zum Ermitteln und Anzeigen einer Restreichweite (24) eines elektrisch antreibbaren Kraftwagens (10), bei welchem mittels einer Steuereinheit (14) fortlaufend eine momentane Restreichweite (24) des Kraftwagens (10), welche bei einem rein elektrischen Antrieb des Kraftwagens (10) erzielbar ist, ermittelt und eine Anzeige der ermittelten Restreichweite (24) auf einer Anzeigeeinheit (16) gesteuert wird,
mit den Schritten:
- Erkennen eines Aktivierens eines Reichweitenerhaltungsmodus (20) mittels der Steuereinheit (14); und
- Ansteuern der Anzeigeeinheit (16) mittels der Steuereinheit (14), wonach eine vor dem Aktivieren des Reichweitenerhaltungsmodus ermittelte Restreichweite (36) während des aktivierten Reichweitenerhaltungsmodus (20) mittels der Anzeigeeinheit (16) angezeigt wird;
**dadurch gekennzeichnet, dass**
während des aktivierten Reichweitenerhaltungsmodus (20) ein unterer Reichweitenwert (32) und ein oberer Reichweitenwert (30) vorgegeben wird, wobei auf der Anzeigeeinheit (16) so lange die vor dem Aktivieren des Reichweitenerhaltungsmodus (20) ermittelte Restreichweite (36) angezeigt wird, wie die momentan ermittelte Restreichweite (24) zwischen dem unteren Reichweitenwert (32) und dem oberen Reichweitenwert (30) liegt.

2. Verfahren nach Anspruch 1,
**dadurch gekennzeichnet, dass**
während des Reichweitenerhaltungsmodus (20) eine Traktionsbatterie des Kraftwagens (10) mittels eines Reichweitenverlängerers aufgeladen und/oder eine elektrische Antriebsmaschine, insbesondere ein Elektromotor, des Kraftwagens (10) ausgeschaltet wird.

3. Verfahren nach Anspruch 1 oder 2,
**dadurch gekennzeichnet, dass**
während des Reichweitenerhaltungsmodus (20) in Abhängigkeit von der momentan ermittelten Restreichweite (24) eine Lastpunktanhebung oder Lastpunktabsenkung eines Verbrennungsmotors des Kraftwagens (10) vorgenommen wird.

4. Verfahren nach einem der vorhergehenden Ansprüche,
**dadurch gekennzeichnet, dass**
der Reichweitenerhaltungsmodus (20) mittels einer weiteren Steuereinheit (18) aktiviert wird, wobei die Steuereinheit (14) so lange ein Signal (22) von der weiteren Steuereinheit (18) empfängt, wie der Reichweitenerhaltungsmodus (20) aktiviert ist.

5. Verfahren nach Anspruch 4,
**dadurch gekennzeichnet, dass**
die Steuereinheit (14) fortlaufend die momentan ermittelte Restreichweite (24) an die weitere Steuereinheit (18) übermittelt, wobei die weitere Steuereinheit (18) eine Betriebsstrategie für den Kraftwagen (10) in Abhängigkeit von den empfangenen Restreichweitenwerten (24) regelt.

6. Verfahren nach Anspruch 5,
**dadurch gekennzeichnet, dass**
die an die weitere Steuereinheit (18) übermittelten Restreichweitenwerte (24) in einer zur Ermittlung der Betriebsstrategie geeigneten Auflösung bereitgestellt werden.

7. Verfahren nach einem der vorhergehenden Ansprüche,
**dadurch gekennzeichnet, dass**
im Anschluss an eine Deaktivierung des Reichweitenerhaltungsmodus (20) die momentan ermittelte Restreichweite (38) mit einer vorgegebenen Zeitverzögerung mittels der Anzeigeeinheit (16) angezeigt wird, falls zum Zeitpunkt (t_{E}) der Deaktivierung des Reichweitenerhaltungsmodus (20) noch die vor dem Aktivieren des Reichweitenerhaltungsmodus ermittelte Restreichweite (36) mittels der Anzeigeeinheit (16) angezeigt wird.

8. Verfahren nach einem der vorhergehenden Ansprüche,
**dadurch gekennzeichnet, dass**
die momentan ermittelte Restreichweite (24) mit einer kleineren Auflösung (26) ermittelt wird, als diese mittels der Anzeigeeinheit (16) angezeigt wird.

9. Verfahren nach einem der vorhergehenden Ansprüche,
**dadurch gekennzeichnet, dass**
die Auflösung (40) der mittels der Anzeigeeinheit angezeigten Restreichweite (34) in Abhängigkeit von einem Energieinhalt wenigstens eines Energiespeichers des Kraftwagens (10) angepasst wird.

10. Verfahren nach einem der vorhergehenden Ansprüche,
**dadurch gekennzeichnet, dass**
die momentane Restreichweite (24) nach Ablauf von vorgegebenen Wegintervallen und/oder Zeitintervallen (28) fortlaufend mittels der Steuereinheit (14) ermittelt wird.

11. Vorrichtung (12) zum Ermitteln und Anzeigen einer Restreichweite (24) eines elektrisch antreibbaren Kraftwagens (10), mit einer Steuereinheit (14) und einer Anzeigeeinheit (16), wobei die Steuereinheit (14) dazu ausgelegt ist, fortlaufend eine momentane Restreichweite (24) des Kraftwagens (10), welche bei einem rein elektrischen Antrieb des Kraftwagens (10) erzielbar ist, zu ermitteln und eine Anzeige der Restreichweite (24) auf der Anzeigeeinheit (16) zu steuern,
wobei
- die Steuereinheit (14) dazu ausgelegt ist, eine Aktivierung eines Reichweitenerhaltungsmodus (20) zu erkennen; und
- die Steuereinheit (14) dazu ausgelegt ist, bei aktiviertem Reichweitenerhaltungsmodus (20) eine Anzeige einer vor dem Aktivieren des Reichweitenerhaltungsmodus ermittelten Restreichweite (36) auf der Anzeigeeinheit (16) zu bewirken;
**dadurch gekennzeichnet, dass**
die Steuereinheit (14) dazu ausgelegt ist, während des aktivierten Reichweitenerhaltungsmodus (20) einen unteren Reichweitenwert (32) und einen oberen Reichweitenwert (30) vorzugeben und die Anzeigeeinheit (16) derart anzusteuern, dass auf der Anzeigeeinheit (16) so lange die vor dem Aktivieren des Reichweitenerhaltungsmodus (20) ermittelte Restreichweite (36) angezeigt wird, wie die momentan ermittelte Restreichweite (24) zwischen dem unteren Reichweitenwert (32) und dem oberen Reichweitenwert (30) liegt.

12. Kraftwagen (10) mit einer Vorrichtung (12) zum Ermitteln und Anzeigen einer Restreichweite (24) nach Anspruch 11.

## Claims

1. Method for determining and displaying a remaining range (24) of an electrically drivable motor vehicle (10) in which an instantaneous remaining range (24) of the motor vehicle (10) attainable with a purely electric drive of the motor vehicle (10) is continuously determined by means of a control unit (14), and a display of the determined remaining range (24) is controlled on a display unit (16),
comprising the steps:
- detecting by means of the control unit (14) when a range preservation mode (20) is activated and
- controlling the display unit (16) by means of the control unit (14), whereby a remaining range (36) determined prior to the activation of the range preservation mode is displayed during the activated range preservation mode (20) by means of the display unit (16);
**characterised in that**
a lower range value (32) and an upper range value (30) are defined while the range preservation mode (20) is activated, wherein the remaining range (36) determined prior to activating the range preservation mode (20) is displayed on the display unit (16) for as long as the instantaneously determined remaining range (24) is between the lower range value (32) and the upper range value (30).

2. Method according to claim 1,
**characterised in that**
a traction battery of the motor vehicle (10) is charged during range preservation mode (20) by means of a range extender and/or an electric drive unit, in particular an electric motor, of the motor vehicle (10) is switched off.

3. Method according to claim 1 or 2,
**characterised in that**
during range preservation mode (20) a load point of an internal combustion engine of the motor vehicle (10) can be raised or lowered as a function of the instantaneously determined remaining range (24).

4. Method according to any one of the preceding claims,
**characterised in that** the range preservation mode (20) is activated by means of
an additional control unit (18), wherein the control unit (14) receives a signal (22) from the additional unit (18) for as long as the range preservation mode (20) is activated.

5. Method according to claim 4,
**characterised in that**
the control unit (14) continuously transmits the instantaneously determined remaining range (24) to the additional control unit (18), wherein the additional control unit (18) controls an operating strategy for the motor vehicle (10) as a function of the received remaining range values (24).

6. Method according to claim 5,
**characterised in that**
the remaining range values (24) transmitted to the additional control unit (18) are provided with a resolution sufficient for determining the operating strategy.

7. Method according to any one of the preceding claims,
**characterised in that** following a deactivation of the range preservation mode (20), the instantaneously determined remaining range (38) is displayed by means of the display unit (16) with a predetermined time delay, if at the time (t_{E}) when the range preservation mode (20) is deactivated the remaining range (36) determined prior to activating the range preservation mode is still displayed by means of the display unit (16).

8. Method according to any one of the preceding claims,
**characterised in that** the instantaneously determined remaining range (24) is determined using a smaller resolution (26) than the resolution at which said range is displayed by means of the display unit (16).

9. Method according to any one of the preceding claims,
**characterised in that** the resolution (40) of the remaining range (34) displayed by means of the display unit is adjusted in response to an energy content of at least one energy storage device of the motor vehicle (10).

10. Method according to any one of the preceding claims,
**characterised in that** the instantaneous remaining range (24) is continuously determined by means of the control unit (14) following the expiration of predetermined route intervals and/or time intervals (28).

11. Device (12) for determining and displaying a remaining range (24) of an electrically drivable motor vehicle (10) comprising a control unit (14) and a display unit (16), wherein the control unit (14) is configured to continuously determine an instantaneous remaining range (24) of the motor vehicle (10) attainable with a purely electric drive of the motor vehicle (10), and to control a display of the remaining range (24) on the display unit (16),
wherein
- the control unit (14) is configured to detect that a range preservation mode (20) is activated; and
- the control unit (14) is configured to cause, while the range preservation mode (20) is activated, a remaining range (36) that was determined prior to activation of the range preservation mode to be displayed on the display unit (16);
**characterised in that**
the control unit (14) is configured to define a lower range value (32) and an upper range value (30) while the range preservation mode (20) is activated and to control the display unit (16) such that the remaining range (36) determined prior to activating the range preservation mode (20) is displayed on the display unit (16) for as long as the instantaneously determined remaining range (24) is between the lower range value (32) and the upper range value (30).

12. Motor vehicle (10) with a device (12) for determining and displaying a remaining range (24) according to claim 11.

## Revendications

1. Procédé pour déterminer et afficher une autonomie restante (24) d'un véhicule automobile (10) pouvant être entraîné par un moteur électrique, selon lequel on détermine en continu au moyen d'une unité de commande (14) une autonomie restante momentanée (24) du véhicule automobile (10), qui peut être atteinte avec un entraînement purement électrique du véhicule automobile (10), et on commande un affichage de l'autonomie restante déterminée (24) sur une unité d'affichage (16),
avec les étapes :
- détection d'une activation d'un mode de maintien d'autonomie (20) au moyen de l'unité de commande (14) ; et
- commande de l'unité d'affichage (16) au moyen de l'unité de commande (14), selon laquelle une autonomie restante (36) déterminée avant l'activation du mode de maintien d'autonomie est affichée au moyen de l'unité d'affichage (16) pendant que le mode de maintien d'autonomie (20) est activé ;
**caractérisé en ce que**,
pendant que le mode de maintien d'autonomie (20) est activé, on prescrit une valeur d'autonomie inférieure (32) et une valeur d'autonomie supérieure (30) et on affiche sur l'unité d'affichage (16), tant que l'autonomie restante (36) déterminée avant l'activation du mode de maintien d'autonomie (20) est affichée, où se situe l'autonomie restante déterminée momentanément (24) entre la valeur d'autonomie inférieure (32) et la valeur d'autonomie supérieure (30).

2. Procédé selon la revendication 1, **caractérisé en ce que**, pendant le mode de maintien d'autonomie (20), une batterie de traction du véhicule automobile (10) est chargée au moyen d'un prolongateur d'autonomie et/ou une machine de propulsion électrique, notamment un moteur électrique, du véhicule automobile (10), est arrêtée.

3. Procédé selon la revendication 1 ou 2, **caractérisé en ce que**, pendant le mode de maintien d'autonomie (20), une augmentation de point de charge ou une diminution de point de charge d'un moteur à combustion interne du véhicule automobile (10) est effectuée en fonction de l'autonomie restante déterminée momentanément (24).

4. Procédé selon l'une des revendications précédentes, **caractérisé en ce qu'**on active le mode de maintien d'autonomie (20) au moyen d'une autre unité de commande (18), l'unité de commande (14) recevant alors un signal (22) en provenance de l'autre unité de commande (18) tant que le mode de maintien d'autonomie (20) est activé.

5. Procédé selon la revendication 4, **caractérisé en ce que** l'unité de commande (14) transmet en continu l'autonomie restante déterminée momentanément (24) à l'autre unité de commande (18), l'autre unité de commande (18) ajustant alors une stratégie de fonctionnement pour le véhicule automobile (10) en fonction des valeurs d'autonomie restante (24) reçues.

6. Procédé selon la revendication 5, **caractérisé en ce que** les valeurs d'autonomie restante (24) transmises à l'autre unité de commande (18) sont fournies avec une résolution convenant à la détermination de la stratégie de fonctionnement.

7. Procédé selon l'une des revendications précédentes, **caractérisé en ce que**, à la suite d'une désactivation du mode de maintien d'autonomie (20), on affiche au moyen de l'unité d'affichage (16) l'autonomie restante déterminée momentanément (38) avec un retard prescrit si, à l'instant (t_{E}) de la désactivation du mode de maintien d'autonomie (20), l'autonomie restante (36) déterminée avant l'activation du mode de maintien d'autonomie, est encore affichée au moyen de l'unité d'affichage (16).

8. Procédé selon l'une des revendications précédentes, **caractérisé en ce qu'**on détermine l'autonomie restante déterminée momentanément (24) avec une plus petite résolution (26) que celle qui est affichée au moyen de l'unité d'affichage (16).

9. Procédé selon l'une des revendications précédentes, **caractérisé en ce qu'**on adapte la résolution (40) de l'autonomie restante (34) affichée au moyen de l'unité d'affichage en fonction d'un contenu d'énergie d'au moins un accumulateur d'énergie du véhicule automobile (10).

10. Procédé selon l'une des revendications précédentes, **caractérisé en ce qu'**on détermine l'autonomie restante momentanée (24) en continu au moyen de l'unité de commande (14) après l'expiration d'intervalles de distance et/ou d'intervalles de temps (28) prédéterminés.

11. Dispositif (12) pour déterminer et afficher une autonomie restante (24) d'un véhicule automobile (10) pouvant être entraîné par un moteur électrique, avec une unité de commande (14) et avec une unité d'affichage (16), laquelle unité de commande (14) est conçue pour déterminer en continu une autonomie restante momentanée (24) du véhicule automobile (10) qui peut être atteinte avec un entraînement purement électrique du véhicule automobile (10), et pour commander un affichage de l'autonomie restante (24) sur l'unité d'affichage (16),
dans lequel
- l'unité de commande (14) est conçue pour détecter une activation d'un mode de maintien d'autonomie (20) ; et
- l'unité de commande (14) est conçue pour, lorsque le mode de maintien d'autonomie (20) est activé, provoquer un affichage d'une autonomie restante (36) déterminée avant l'activation du mode de maintien d'autonomie sur l'unité d'affichage (16);
**caractérisé en ce que**,
l'unité de commande (14) est conçue pour, pendant que le mode de maintien d'autonomie (20) est activé, prescrire une valeur d'autonomie inférieure (32) et une valeur d'autonomie supérieure (30) et commander l'unité d'affichage (16) de telle sorte qu'il est indiqué sur l'unité d'affichage (16), tant que l'autonomie restante (36) déterminée avant l'activation du mode de maintien d'autonomie (20) est affichée, où se situe l'autonomie restante déterminée momentanément (24) entre la valeur d'autonomie inférieure (32) et la valeur d'autonomie supérieure (30).

12. Véhicule automobile (10) avec un dispositif (12) pour déterminer et afficher une autonomie restante (24) selon la revendication 11.
